# EUROPÄISCHE PATENTANMELDUNG

(11) **EP 1 188 667 A2**
(43) Veröffentlichungstag der Anmeldung: **20.03.2002**
(21) Anmeldenummer: 01121411.1
(22) Anmeldetag: 07.09.2001
(51) Int. Cl.: B64F 1/305

(54) **Kontaktschuh**

(30) Priorität: 15.09.2000 DE 20015971 U
(71) Anmelder: HÜBNER GmbH, 34123 Kassel (DE)
(72) Erfinder: Mazur, Markus, 34131 Kassel (DE)
(74) Vertreter: WALTHER, WALTHER & HINZ Patentanwälte

(57) **Zusammenfassung**

Kontaktschuh (1, 2) als Sicherungseinrichtung zur Anordnung zwischen dem Flugzeugrumpf und einer Zugangsbrücke zu einem Flugzeug, z. B. einer Fluggastbrücke, umfassend eine deformierbare Hülle (10) mit einer im Inneren der Hülle (10) angeordneten Schaltereinrichtung (30), die bei Deformation des Kontaktschuhes (1) betätigbar ist,
wobei die Schaltereinrichtung (30) mindestens zwei einander gegensinnig betätigbare Schalter (50, 60) aufweist.

## Beschreibung

Die Erfindung betrifft einen Kontaktschuh zur Anordnung als Sicherungseinrichtung zwischen dem Flugzeugrumpf eines Flugzeuges und einer Zugangsbrücke zu dem Flugzeug, z. B. einer Fluggastbrücke, umfassend eine deformierbare Hülle mit einer im Inneren der Hülle angeordneten Schaltereinrichtung, die bei Deformation des Kontaktschuhes betätigbar ist.

Zugangsbrücken für Flugzeuge, insbesondere Fluggastbrücken, stellen sich als Übergänge dar, die sich an den im Wesentlichen gewölbt ausgebildeten Flugzeugrumpf oberhalb und unterhalb der Türöffnung um die seitlich angeschlagene Tür herum anschmiegen. Es ist nun durchaus nicht unüblich, das Flugzeug zu betanken, während eine solche Zugangsbrücke in Kontakt mit dem Flugzeugrumpf steht. Beim Betanken wird sich aufgrund der Gewichtszunahme des Flugzeugs das Flugzeug absenken. Es ist daher bekannt, entsprechend auch die Zugangsbrücke abzusenken, um einerseits eine Beschädigung des Flugzeugs bzw. auch der Zugangsbrücke zu vermeiden und andererseits eine Spaltbildung zwischen Flugzeugrumpf und Zugangsbrücke zu vermeiden; denn ein solcher Spalt stellt eine potentielle Gefahrenquelle für das Bedienungspersonal dar. Es kommt nun allerdings häufiger vor, dass die Steuerung zum Absenken der Zugangsbrücke bzw. der Fluggastbrücke nicht ordnungsgemäß funktioniert. Für diesen Fall ist ein sogenannter Kontaktschuh als Sicherungseinrichtung vorgesehen, der zwischen die Zugangsbrücke einerseits und den Rumpf des Flugzeugs andererseits eingesetzt wird. Das bedeutet, dass dann, wenn sich das Flugzeug absenkt, und die Fluggastbrücke bzw. die Zugangsbrücke eine derartige Bewegung nicht mitmacht, der Kontaktschuh zusammengedrückt wird, und aufgrund von einer in dem Kontaktschuh angeordneten Schaltereinrichtung ein entsprechender Impuls an die Steuerung der Treppe übermittelt wird, mit der Folge, dass sich die Treppe absenkt.

Es hat sich jedoch herausgestellt, dass die bekannten Kontaktschuhe nicht zuverlässig arbeiten. Ein Grund hierfür sind defekte Schalter der Schaltereinrichtung oder auch Verschmutzungen der Schalter, die den Schaltvorgang blockieren. Grundsätzlich ist auch davon auszugehen, dass das Belasten von Schaltern zur Erzeugung eines Impulses funktionssicherer ist, als die Verwendung von Schaltern, die bei Entlastung den entsprechenden Schaltimpuls abgeben.

Der Erfindung liegt daher die Aufgabe zugrunde, einen Kontaktschuh der eingangs genannten Art bereitzustellen, der sich durch eine höhere Zuverlässigkeit auszeichnet, und damit einhergehend eine höhere Sicherheit für das Arbeitspersonal bei der Wartung des Flugzeuges gewährleistet.

Die Aufgabe wird erfindungsgemäß dadurch gelöst, dass die Schaltereinrichtung mindestens zwei einander gegensinnig betätigbare Schalter aufweist. Unter 'gegensinnig betätigbaren Schaltern' sind hierbei Schalter zu verstehen, die auf Druck bzw. bei Entlastung einen entsprechenden Schaltimpuls abgeben. Das heißt, bei gegensinnig betätigbaren Schaltern handelt es sich um Druck- und Entlastungsschalter. Durch die Verwendung derart gegensinnig betätigbarer Schalter wird. in beide Richtungen ein sicheres Öffnen der Schalter und ein sicheres Schließen der Schalter bewirkt, statt ausschließlich eines sicheren Öffnens oder Schließens der Schalter, wie nach dem Stand der Technik. Das bedeutet, dass bei einer eventuellen Fehlfünktion des Schalters der Treppenantrieb ausgeschaltet bleibt, was zur Folge hat, dass sich zwischen Flugzeugrumpf und Treppe zumindest der zu eingangs erwähnte Spalt nicht bilden kann, mit der Folge, dass keine Gefahr für das Bedienpersonal entsteht.

Im Einzelnen ist vorgesehen, dass insgesamt vier Schalter für die Schaltereinrichtung vorgesehen sind, wobei zwei Schalter bei Belastung (Druckschalter) und zwei Schalter bei Entlastung (Entlastungsschalter) einen Schaltimpuls abgeben. Hierbei weist vorteilhaft die Schaltereinrichtung neben zwei Druckschaltern zwei der zuvor genannten Entlastungsschalter auf. Für die Funktion bei der Verwendung der oben genannten Schalter in der Schaltereinrichtung ergibt sich nunmehr Folgendes:

Bei Druck auf den Kontaktschuh von oben, d. h. bei sich absenkendem Flugzeugrumpf findet eine Entlastung der Entlastungsschalter statt. Nur aufgrund dieses Signales senkt sich die Zugangsbrücke noch nicht ab.

Werden nun die Belastungsschalter belastet, senkt sich die Treppe hingegen ab, was bewirkt, dass der Schuh selbst entlastet wird. Werden hierbei nur die Belastungsschalter entlastet, d. h. erfolgt ein Signal nur aufgrund der Belastungsschalter, dann wird die Treppe in ihrer Bewegung nach unten noch nicht gestoppt. Werden hingegen die Entlastungsschalter wieder belastet, wird die Treppe angehalten. Der Vorteil dieser Schalter bzw. der Schalterkombination besteht darin, dass nur durch einen definierten Druck auf die Schaltereinrichtung sich die Treppe bewegt: oder still steht. Weiterhin bedeutet das, dass, wenn ein oder sogar zwei Schalter defekt sein sollten, der Kontaktschuh weiter aktiv bleibt und neben gegebenenfalls einer Fehlermeldung für den Wartungsdienst, die Korrektursignale für die Steuerung der Zugangsbrücke sendet. Solange der Kontaktschuh die Signale 'zwei Schalter entlastet', und 'zwei Schalter belastet', oder 'ein Schalter entlastet' und 'drei Schalter belastet' oder 'drei Schalter belastet' und 'ein Schalter entlastet' sendet, bleibt die Sicherheit, insbesondere vor der Spaltbildung zwischen Brücke und Rumpf gewährleistet.

Im Einzelnen ist vorgesehen, dass die Schaltereinrichtung einen Schalterträger zur Aufnahme der Entlastungsschalter aufweist, wobei der Schalterträger elastisch nachgiebig auf dem Gehäuseboden angeordnet ist. Durch mehrere Stützen ist sowohl der Schalterträger, als auch die Schaltbrücke geführt.

Hierbei ist der Gehäuseboden im Bereich des Schalterträgers mit Stützen, insbesondere vier Stützen zur Aufnahme der Schaltbrücke versehen, durch die die Entlastungsschalter betätigbar sind. Im unbelasteten Zustand des Kontaktschuhes werden die Entlastungsschalter durch die Schaltbrücke belastet. Wird nun der Kontaktschuh von außen zusammengedrückt, wird durch den Gehäusedeckel der Schalterträger, aufgrund der elastisch nachgiebigen Lagerung des Schalterträgers auf dem Gehäuseboden, nach unten bewegt, mithin erfolgt eine Entlastung der Entlastungsschalter dadurch, dass diese außer Kontakt mit der Schaltbrücke gebracht werden. Gleichzeitig erfolgt durch einen an dem Schalterträger angeordneten Schaltbügel eine Belastung der Belastungsschalter. Um eine im Wesentlichen gleichzeitige Be- und Entlastung der entsprechenden Schalter zu gewährleisten, ist der Abstand des Schaltbügels von den Belastungsschaltern im Wesentlichen genauso groß, wie der Weg, um den der Schalterträger durch den Gehäusedeckel nach unten verschieblich ist.

Nach einem weiteren Merkmal der Erfindung ist der Innenraum des Kontaktschuhes mit einer Entlüftung versehen, die in einem von außen gegen Spritzwasser geschützten Raum mündet. Notwendigerweise muss ein derartiger Kontaktschuh, da er im Bereich der Schaltereinrichtung hermetisch abgeschlossen ist, um eine Beschädigung durch Feuchtigkeit zu vermeiden, eine Entlüftung aufweisen, um überhaupt eine Möglichkeit der Kompression des Kontaktschuhes zu ermöglichen. Durch die im Wesentlichen von außen unzugängliche Entlüftung des Innenraumes des Kontaktschuhes wird nun - wie bereits oben erläutert - auf Dauer sichergestellt, dass der Kontaktschuh zusammengedrückt werden kann, ohne dass die Gefahr der Verschmutzung der Entlüftung besteht, und dass außerdem die Schaltereinrichtung gegen Feuchtigkeit geschützt ist.

Nach einem weiteren vorteilhaften Merkmal der Erfindung ist der Kabelanschluss für die Schaltereinrichtung im Inneren des Kontaktschuhes ebenfalls gegen eindringende Feuchtigkeit geschützt angeordnet.

Vorteilhaft ist weiterhin bei der gewählten Konstruktion, dass die Schaltereinrichtung als gesonderte Einheit aus dem Kontaktschuh ausbaubar ist. Hierzu ist vorgesehen, dass sämtliche Schalter, also sowohl die Entlastungsschalter, als auch die Belastungsschalter auf dem Gehäuseboden angeordnet sind, der Bestandteil des Gehäuses des Kontaktschuhes ist und aus diesem entfernt werden kann.

Anhand der Zeichnungen wird die Erfindung nachstehend beispielhaft näher erläutert.

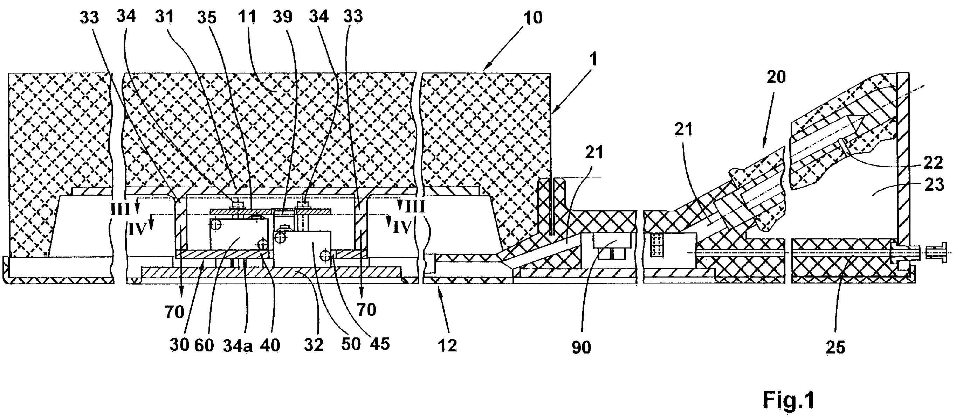

- Fig. 1: zeigt eine Schnittdarstellung des Kontaktschuhes im unbelasteten Zustand des Schuhes;
- Fig. 2: zeigt eine Schnittdarstellung bei belastetem Schuh;
- Fig. 3: zeigt eine Darstellung gemäß der Linie III - III aus Fig. 1;
- Fig. 4: zeigt eine Darstellung gemäß der Linie IV - IV aus Fig. 1.

Der insgesamt mit 1 bezeichnete Kontaktschuh weist eine insgesamt mit 10 bezeichnete Hülle und ein mit 20 bezeichnetes Griffteil auf.

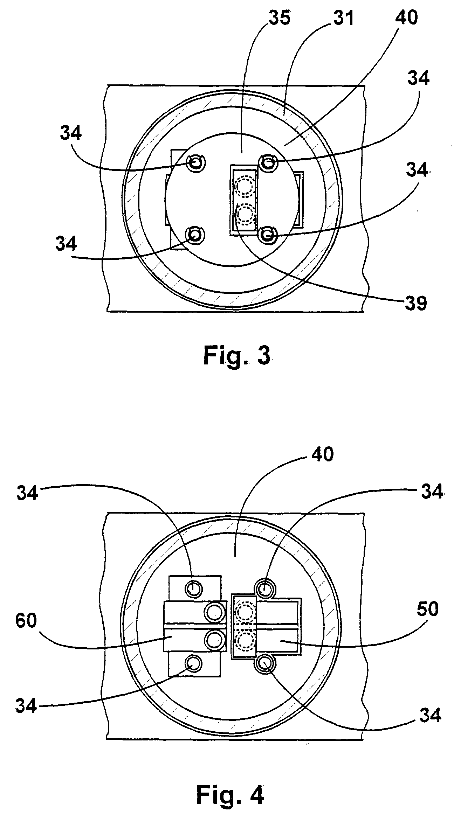

Die Hülle 10 zeigt eine kissenförmige Ummantelung 11, beispielsweise aus Schaumstoff und einen Boden 12. In der Hülle 10 befindet sich die insgesamt mit 30 bezeichnete Schaltereinrichtung. Die mit 30 bezeichnete Schaltereinrichtung umfasst einen Gehäusedeckel 31, sowie einen Gehäuseboden 32. Der Gehäuseboden 32 ist hierbei Teil des Bodens 12 der Hülle 10 und ist lösbar mit diesem Boden 12 verbindbar. Der Gehäusedeckel 31 besitzt zwei Stege 33, die mit dem mit 40 bezeichneten Schalterträger in Verbindung stehen. Der mit 40 bezeichnete Schalterträger nimmt die beiden Entlastungsschalter 60 auf. Auf dem Gehäuseboden 32 befinden sich darüber hinaus vier Stützen 34 (Fig. 3, Fig. 4), die zum einen der Aufnahme der Schaltbrücke 35 dienen und die darüber hinaus für die Führung des Schalterträgers 40 sorgen. Der Schalterträger 40 ist elastisch nachgiebig auf dem Gehäuseboden 32 angeordnet. Hierzu sind unter dem durch die Stützen 34 geführten Schalterträger 40 jeweils eine Feder 34a angeordnet. Zur Aufnahme der beiden Belastungsschalter 50 besitzt der Schalterträger 40 eine entsprechende Ausnehmung 45, so dass die Belastungsschalter 50 auf dem Gehäuseboden 32 aufsitzen.

Zur Betätigung der Belastungsschalter 50 ist ein Schaltbügel 39 am Gehäuseboden 32 angeordnet. Oberhalb des Schaltbügels 39 besitzt die Schaltbrücke eine entsprechend große Öffnung, damit der Schaltbügel außer Eingriff mit den Belastungsschaltern gelangen kann.

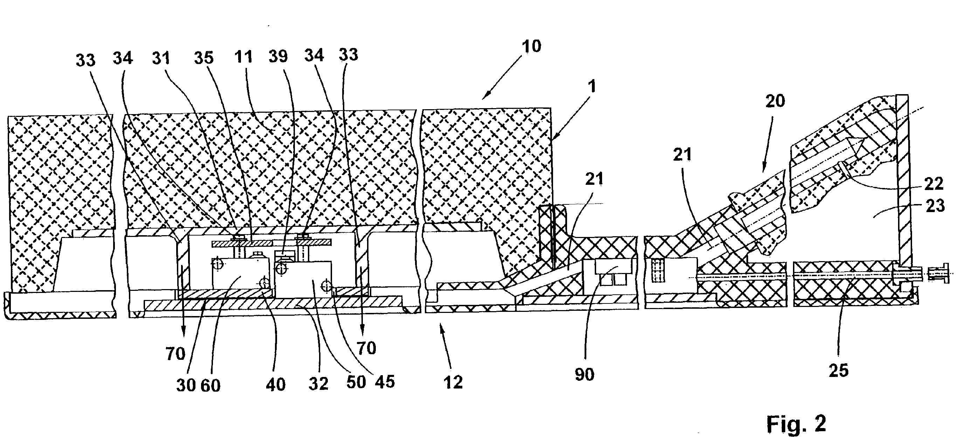

Bei Kompression des Kontaktschuhes durch Druck von oben wird nun der Gehäusedeckel 31 und damit der Schalterträger 40 durch die Stege 33 in Richtung des Pfeiles 70 bewegt. Hierbei gelangt der Schaltbügel 39, der mit. dem Schalterträger 40 verbunden ist, in Eingriff mit den Schaltern 50, wodurch diese belastet werden. Gleichzeitig werden durch die Bewegung des Schalterträgers 40 in Richtung der Pfeile 70 die auf dem Schalterträger 40 aufsitzenden Entlastungsschalter 60 außer Eingriff mit der Schaltbrücke 35 gebracht. Das heißt, dass im Zustand der Belastung des Kontaktschuhes (Fig. 2) die beiden Belastungsschalter 50 belastet sind, hingegen die beiden Entlastungsschalter 60 entlastet sind.

Gegenstand der Erfindung ist ebenfalls die Ausbildung des Griffes 20. Von dem durch den Gehäusedeckel und den Gehäuseboden gebildeten Hohlraum im Kontaktschuh, in dem die Schaltereinrichtung 30 angeordnet ist, erfolgt eine Entlüftung zu dem Griff 20 durch die Leitung 21. Die Leitung 21 mündet in einer Entlüftungsbohrung 22, die in dem geschützten Raum 23 des Griffes 20 ausläuft, wobei der Raum 23 soweit nach außen abgeschirmt ist, dass eine Verschmutzung der Entlüftungsbohrung 22 vermieden wird.

Darüber hinaus ist ein Zugang 25 im Bereich des Griffes 20 vorgesehen, durch den Kabel ( nicht dargestellt) zu den Kontakten 90 geführt werden, die mit den Schaltern 50, 60 verbunden sind. Die Ausbildung des Griffes 20 ist darüber hinaus derart gestaltet, dass ein Aufnehmen mit dem Fuß durch das Bedienpersonal nicht mehr möglich ist, weil keinerlei Angriffsfläche für den Fuß des Bedienpersonals besteht.

## Patentansprüche

1. Kontaktschuh (1, 2) als Sicherungseinrichtung zur Anordnung zwischen dem Flugzeugrumpf und einer Zugangsbrücke zu einem Flugzeug, z. B. einer Fluggastbrücke, umfassend eine deformierbare Hülle (10) mit einer im Inneren der Hülle (10) angeordneten Schaltereinrichtung (30), die bei Deformation des Kontaktschuhes (1) betätigbar ist,
**dadurch gekennzeichnet,**
**dass** die Schaltereinrichtung (30) mindestens zwei einander gegensinnig betätigbare Schalter (50, 60) aufweist.

2. Kontaktschuh nach Anspruch 1,
**dadurch gekennzeichnet.**
**dass** insgesamt vier Schalter (50, 60) für die Schaltereinrichtung (30) vorgesehen sind, wobei zwei Schalter (50) bei Belastung (Druckschalter) und zwei Schalter (60) bei Entlastung (Entlastungsschalter) einen Schaltimpuls abgeben.

3. Kontaktschuh nach Anspruch 2,
**dadurch gekennzeichnet,**
**dass** die Schaltereinrichtung (30) neben zwei Druckschaltern (50) zwei Entlastungsschalter (60) aufweist.

4. Kontaktschuh nach Anspruch 1,
**dadurch gekennzeichnet,**
**dass** die Schaltereinrichtung (30) ein Schaltergehäuse mit einem Gehäuseboden (32) und einem Gehäusedeckel (31) umfasst, wobei der Gehäusedeckel (31) relativ zum Gehäuseboden (32) verschieblich ist.

5. Kontaktschuh nach Anspruch 4,
**dadurch gekennzeichnet,**
**dass** der Gehäusedeckel (31) mit einem Schalterträger (40) zur Aufnahme der Schalter (60) in Verbindung, wobei der Schalterträger (40) elastisch nachgiebig auf dem Gehäuseboden (32) angeordnet ist.

6. Kontaktschuh nach Anspruch 5,
**dadurch gekennzeichnet,**
**dass** der Gehäuseboden (32) im Bereich des Schalterträgers (40) Stützen (34) zur Aufnahme einer Schaltbrücke (35) aufweist, durch die die Belastungsschalter (50) und die Entlastungsschalter (60) betätigbar sind.

7. Kontaktschuh nach Anspruch 5,
**dadurch gekennzeichnet,**
**dass** der Schalterträger (40) durch den Gehäusedeckel (31) verschieblich ist.

8. Kontaktschuh nach einem oder mehrerer der voanstehenden Ansprüche,
**dadurch gekennzeichnet,**
**dass** der Schalterträger (40) im Bereich der Belastungsschalter (50) eine Ausnehmung (45) aufweist, so dass die Belastungsschalter (50) auf dem Gehäuseboden (32) aufsitzen.

9. Kontaktschuh nach einem oder mehrerer der voanstehenden Ansprüche,
**dadurch gekennzeichnet,**
**dass** der Schalterträger (40) einen Schaltbügel (39) für die Belastungsschalter (50) aufweist.

10. Kontaktschuh nach einem oder mehrerer der voanstehenden Ansprüche,
**dadurch gekennzeichnet,**
**dass** der Abstand des Schaltbügels (39) von den Belastungsschaltern (50) dem Weg entspricht, um den der Schalterträger (40) durch den Gehäusedeckel (31) nach unten verschieblich ist.

11. Kontaktschuh nach Anspruch 6,
**dadurch gekennzeichnet.**
**dass** der Innenraum des Kontaktschuhes (1) eine Entlüftung (21, 22) aufweist, die in einem geschützten Raum (23) mündet.

12. Kontaktschuh nach Anspruch 1,
**dadurch gekennzeichnet,**
**dass** die Kontakte (90) im Inneren des Kontaktschuhes (1) angeordnet sind.

13. Kontaktschuh nach Anspruch 1,
**dadurch gekennzeichnet,**
**dass** die Schaltereinrichtung (30) als gesonderte Einheit aus dem Kontaktschuh ausbaubar ist.

14. Kontaktschuh nach Anspruch 4,
**dadurch gekennzeichnet.**
**dass** der Gehäuseboden (32) zur Aufnahme der Schaltereinrichtung (30) lösbar mit dem Boden (12) der Hülle (11) verbunden ist.
